# EUROPÄISCHE PATENTSCHRIFT

(11) **EP 0 757 604 B1**
(45) Veröffentlichungstag und Bekanntmachung des Hinweises auf die Patenterteilung: **29.12.1999**
(21) Anmeldenummer: 95917973.0
(22) Anmeldetag: 27.04.1995
(51) Int. Cl.: B23B 51/06

(54) **RUNDLAUFWERKZEUG, INSBESONDERE BOHRER**
ROTARY TOOL, IN PARTICULAR A DRILL BIT
OUTIL CONCENTRIQUE, NOTAMMENT FORET

(30) Priorität: 27.04.1994 DE 9407222 U
(43) Veröffentlichungstag der Anmeldung: 12.02.1997
(73) Patentinhaber: KENNAMETAL HERTEL AG Werkzeuge + Hartstoffe, 90766 Fürth (DE)
(72) Erfinder: KAMMERMEIER, Dirk, 90547 Stein (DE)
(74) Vertreter: Tergau, Enno, Dipl.-Ing.
(86) Internationale Anmeldenummer: EP9501600
(87) Internationale Veröffentlichungsnummer: WO9529030

(56) Entgegenhaltungen:
- EP-A- 0 186 067
- DE-A- 3 601 385
- PATENT ABSTRACTS OF JAPAN vol. 14 no. 127 (M-0947) ,9.März 1990 & JP,A,01 321105 (HITACHI KOKI CO LTD) 27.Dezember 1989,
- AMERICAN MACHINIST, 2.April 1951 LONDON, GB, 'internal-cooled bits'

## Beschreibung

Die Erfindung betrifft einen Bohrer mit den Merkmalen des Oberbegriffes des Anspruches 1. Ein derartiges Bohrwerkzeug ist bekannt aus DE 36 01 385 C2. Dessen drallgenuteter Schaft besteht bevorzugt aus Vollhartmetall und ein wesentliches Merkmal sind dort wendelförmig verlaufende, innenliegende Kanäle, mit denen Kühlschmiermittel in den Schneidenbereich der Bohrwerkzeugspitze transportiert wird. Die Kanäle münden in die jeweiligen Freiflächen der Werkzeugschneiden aus, so daß das Kühlschmiermittel in den unmittelbaren Schneidenbereich gelangt und dabei auch die Kühlung der Bohrerschneiden bewirkt.

Gerade bei Bohrwerkzeugen für tiefe Bohrungen bereitet die Kühlung der Bohrerschneiden Probleme. Diese Kühlung ist besonders wichtig bei Vollhartmetallbohrern und wird durch Kühlschmiermittel bewirkt. In der Zerspanungstechnik besteht ganz allgemein ein Trend zur Trockenbearbeitung, um die Nachteile der Naßbearbeitung bzw. Naßzerspanung zu vermeiden. Diese Nachteile sind die Arbeitsplatzbelastung und die Entsorgungsprobleme, aber auch der hohe Wasseranteil von Kühlschmier-Emulsionen, der am Werkstück zu Korrosionserscheinungen führen kann.

Ein weiteres Problem insbesondere bei Hochleistungsbohrern und bei tiefen Bohrungen ist die Einhaltung von deren Passungsgenauigkeit. Dazu ist der Bohrer mit einer Toleranzangabe versehen. Bei engen Toleranzen kann diese jedoch die ihr zugeordnete Passungsgenauigkeit nur gewährleisten, wenn keine Überwärmung im wichtigen Schneidenbereich erfolgt. Eine ausreichende Wärmeabfuhr aus dem Schneidenbereich ist daher eine Grundvoraussetzung für die angestrebte Trockenzerspanung.

Es ist zwar in der Zerspanungstechnik allgemein bekannt, daß die Schneidwerkstoffe Siliziumnitrit und Oxidkeramik einen geringen Wärmeausdehnungskoeffizienten aufweisen und somit wenig wärmeempfindlich sind. Ihre begrenzte Einsetzbarkeit beruht aber darauf, daß diese Schneidwerkstoffe sehr spröde sind. Als Schneidwerkstoff herkömmlich eingesetztes Hartmetall hat indessen den Nachteil einer höheren Wärmeausdehnung.

Die Zerspanungsleistung von Hartmetallwerkzeugen wird heute durch insbesondere im Schneidenbereich wirksame Beschichtungen erhöht. Das bedeutet aber zwangsläufig höhere Temperaturen im Kontaktzonenbereich und dementsprechend hohe Anforderungen an die Wärmeabführung.

Des weiteren ist aus JP 1 321 105 ein Stirn-Schleifwerkzeug mit etwa rohrförmigem Schaft bekannt, dessen Schaftwand von in Axialrichtung verlaufenden, in die Schaftstirnseite einmündenden Kühlmittelkanälen durchsetzt ist. Die stirnseitigen Ausmündungen zweier Kühlmittelkanäle sind durch einen auf das Stirnende des Schaftes aufgesetzten Ring mit den Kühlkanalenden zugewandter Ringnut zur Bildung einer Kühlmittelschleife eines in sich geschlossenen Kühlmittelkreislaufes räumlich miteinander verbunden.

Der Erfindung liegt die Aufgabe zugrunde, Bohrer so auszugestalten, daß sie trotz Eignung zur Trockenzerspanung im Kontaktzonenbereich eine gute Wärmeabführung ermöglichen. Diese Aufgabe wird durch Anspruch 1 gelöst. Ganz allgemein besteht die Lösung darin, daß in den Schaft eine Kühlmittelschleife implantiert wird, die möglichst nahe an den Kontaktzonenbereich, also an die in herkömmlicher Weise schafteigene Schneide herangeführt wird, um in diesem kritischen Bereich eine gute Kühlwirkung zu entfalten. Die Herstellung einer solchen Kühlmittelschleife, d.h. insbesondere die im Kontaktzonenbereich erwünschte Umlenkung der Kühlmittelflußrichtung innerhalb des Werkzeugschaftes wird durch das Aufsetzen eines Verschlußplatte auf die Mündungsenden der Kanäle in Bereichen bewirkt, die nicht oder nur unwesentlich von den im Betrieb einwirkenden Zerspanungskräften beansprucht sind. Dabei stehen die Mündungsenden in räumlicher Verbindung miteinander und die Abdeckung der Mündungsenden ist so getroffen, daß kein Kühlmittel nach außen tritt.

Die einen Kühlmitteldurchfluß ermöglichende Raumverbindung zwischen den insbesondere zwei miteinander korrespondierenden Mündungsenden kann in unterschiedlicher Weise dadurch bewerkstelligt werden, daß entweder die Kontaktfläche des Verschlußplatte und/oder die Gegenfläche des Stirnendes des Bohrerschaftes zwischen den beiden Mündungsenden genutet sind. Sind beide Flächen genutet, so korrespondieren die Nuten zur Bildung eines gemeinsamen Kanals miteinander.

Zweckmäßig besteht das Verschlußplatte aus einem Werkzeugstahl von hoher Wärmeleitfähigkeit.

Einzelne Ausgestaltungsmerkmale sind Gegenstand der Unteransprüche.

Die Kühlmittelschleife im Werkzeugkörper bzw. Bohrer korrespondiert zur Bildung des Kühlmittelkreislaufes mit einer analog wirksamen Kühlmittelschleife an der Werkzeugmaschine - dort unter Einschluß der Werkzeugspindel. Dementsprechend ist die Werkzeugmaschinenspindel im Schnittstellenbereich zum Werkzeug mit Mündungen ebenfalls eines Kühlmittelzulauf- und eines Kühlmittelablaufkanals versehen.

Die Erfindung wird anhand von in den Figuren dargestellten Ausführungsbeispielen näher erläutert. Es zeigen:

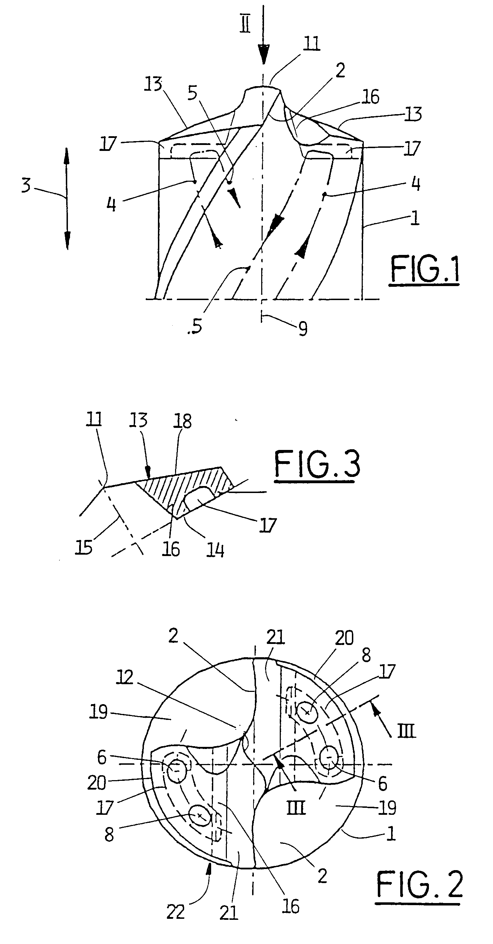

- Fig. 1: die Seitenansicht einer erfindungsgemäß ausgebildeten Bohrerspitze mit aufgedeckelten Verschlußplatten,
- Fig. 2: eine Draufsicht auf die Bohrerspitze in Pfeilrichtung II von Fig. 1,
- Fig. 3: einen Teilschnitt entsprechend der Schnittlinie III-III in Fig. 2,

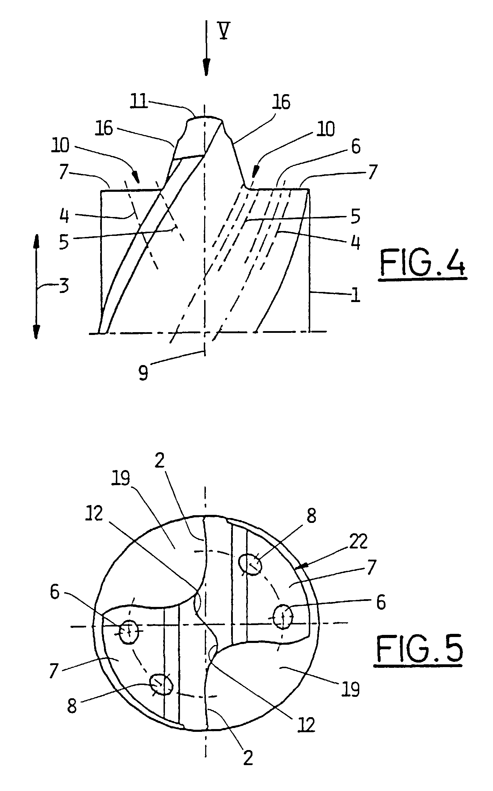

- Fig. 4: eine Seitenansicht des aus Vollhartmetall bestehenden, einstückig mit den Bohrerschneiden versehenen Bohrerschaftes ohne aufgesetzte Verschlußplatten,
- Fig. 5: eine Draufsicht auf die Schaftspitze entsprechend dem Pfeil V in Fig. 4,
- Fig. 6: die Schnittdarstellung einer Werkzeugmaschinenspindel im Schnittstellenbereich zum Werkzeug.

Der Bohrer besteht aus dem bevorzugt aus Vollhartmetall gefertigten Schaft 1 mit im Bereich der Schaftspitze angeordneten Bohrerschneiden 2. Der Schaft 1 ist von im wesentlichen in seiner Längsrichtung 3 verlaufenden Kanälen 4,5 durchsetzt, die in das Arbeitsende 7 des Schaftes 1 ausmünden. Die Kanäle 4,5 treten mit ihren Mündungsenden 6,8 in die Arbeitsenden 7 aus. Im Bereich der Mündungsenden 6,8 sind die beiden Arbeitsenden 7 als Ebenen ausgebildet, die hier beispielsweise rechtwinklig zur Bohrerachse 9 ausgerichtet sind.

Die Arbeitsenden 7 bilden bei dem beispielsweise dargestellten Bohrer als Stirnenden der beiden Schaftrippen 22 zwei Stirnsegmente 10, zwischen denen nach Art eines Radialgrates derjenige Teil des Bohrerschaftes in Längsrichtung 3 hervorsteht, der die mit dem Schaft 1 einstückige Bohrerspitze 11 mit den beiden Bohrerschneiden 2 und dazwischen der Querschneide 12 bildet.

Die beiden Stirnsegmente 10 sind beim kompletten Bohrer im wesentlichen durch Verschlußplatten 13 abgedeckt. Die Verschlußplatten 13 liegen mit ihrer Kontaktfläche 14 bündig auf den Stirnflächen der Stirnsegmente 10 auf. In gleicher Weise tangieren ihre der Bohrerachse 9 zugewandten Flanken 15 die Gegenflanken 16 der Bohrerspitze 11 vollflächig. Die Verschlußplatten 13 sind im Kontaktbereich ihrer Kontaktflächen 14 bzw. Flanken 15 mit den Gegenflächen des Vollhartmetall-Schaftes bzw. der zugehörigen Bohrerspitze 11 verklebt oder verlötet. Sinn dieser stoffschlüssigen Verbindung und des vollflächigen Kontaktes ist ein angestrebter maximaler Wärmeübergang im Kontaktbereich zwischen diesen Teilen.

Die Verschlußplatten 13 tragen im Bereich ihrer Kontaktoberfläche Nuten 17 zur Bildung einer räumlichen Verbindung zwischen den Mündungsenden 6,8 der Kanäle 4,5. Die Nuten 17 sind dadurch die Bildner einer Kühlmittelschleife mit den Kanälen 4,5 als Schleifenanfang und Schleifenende. Es können aber auch analoge Nuten in die Stirnflächen der Arbeitsenden 7 eingebracht sein oder es können solche Stirnendennuten mit den Nuten 17 der Verschlußplatten 13 zur Bildung eines gemeinsamen Kanals miteinander korrespondieren.

Die Außenflächen 18 der Verschlußplatten 13 schließen bündig mit der Freifläche 21 der benachbarten Schneide 2 ab.

Der in den Ausführungsbeispielen dargestellte Bohrerschaft ist der eines spiralgenuteten Bohrers und die Anzahl der Kühlmittelschleifen entspricht der Anzahl der dort zwei Drallnuten der dazwischenliegenden Schaftrippe 22. Es können statt einer einzigen Kühlmittelschleife zwischen zwei Drallnuten 19 auch mehrere Kühlmittelschleifen angeordnet sein. Diese Möglichkeit besteht insbesondere bei Bohrern mit größerem Wirkdurchmesser. Die Spannuten müssen nicht als Drallnuten ausgebildet sein. Es spielt für die Erfindung keine Rolle, ob die Spannuten gerade Nuten sind.

Im Bohrerspitzenbereich bilden die beiden Verschlußplatten 13 mit ihren Außenflanken 20 einen Teil des Außenmantels des Schaftes 1.

Die Kanäle 4,5 erstrecken sich auf der der Bohrerspitze 10 abgewandten Seite bis in den Schnittstellenbereich zur Werkzeugmaschinenspindel. Die Verschlußplatten 13 bilden mit ihren Außenflächen 18 im wesentlichen vollständig den den Bohrerschneiden 12 abgewandten Teil der Bohrerfreiflächen.

Zum Nachschleifen des Bohrers werden die aufgeklebten oder aufgelöteten Verschlußplatten 13 abgenommen. Dies ist in einfacher Weise unter Wärmezuführung möglich. Dadurch kann das Nachschleifen der Bohrerspitze in einer durch die Verschlußplatten 13 nicht beeinflußten Weise vorgenommen werden.

Entsprechend der Werkstoffabtragung im Bereich der Bohrerspitze 11 wird allerdings auch das Stirnende 7 bzw. wird dabei die zugeordneten Stirnflächen abgeschliffen, um die alten Bohrerspitzenkonturen wieder herzustellen.

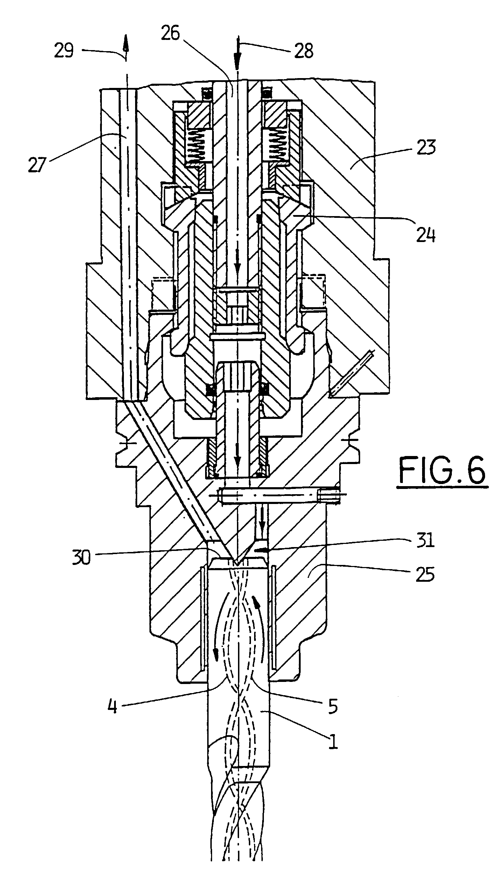

Fig. 6 zeigt das werkzeugseitige Ende der Antriebsspindel 23 einer Bohrmaschine mit dem Spannsystem 24 für einen erfindungsgemäß von Kühlkanälen durchsetzten Bohrer, von dem hier nur der Schaft 1 dargestellt ist. Der Bohrerschaft 1 ist in dem Spannfutter 25 eingespannt. Das mit der Spindel 23 verbundene Spannsystem 24 dient zur Spannung des mit dem Bohrer bestückten Spannfutter 25 an der Antriebsspindel 23.

Das Spannsystem 24 und/oder die Spindel 23 sind mit einer Zulaufleitung 26 und einer Ablaufleitung 27 für das Kühlmittel versehen. Die Durchflußrichtungen sind durch die Richtungspfeile 28,29 angezeigt. Die Zulaufleitung 26 korrespondiert mit dem Zulaufkanal 4 und die Ablaufleitung 27 mit dem Kanal 5 im Schaft 1. Die Kanäle 4,5 sind hier nur schematisch dargestellt. Jeder Bohrerschneide 2 ist mindestens ein Kanalpaar 4,5 im Bohrer bzw. Bohrerschaft 1 zugeordnet. Die Kanäle 4,5 münden in unterschiedliche Bereiche des maschinenseitigen Schaftendes 30 aus. Diese Bereiche sind maschinenseitig voneinander separiert, damit der Zufluß 28 und der Abfluß 29 von Kühlmittel in einem geschlossenen Kühlmittelkreislauf geführt sind, der in sich nicht unterbrochen ist. Die Enden des Kühlmittelkreislaufes befinden sich oberhalb und unterhalb des in Fig. 6 dargestellten Funktionsbereiches. Maschinenseitig liegt die eine Hälfte und werkzeugseitig die andere Hälfte des Kühlmittelkreislaufes und die Schnittstelle 31 zwischen den beiden Teilen des Kühlmittelkreislaufes befindet sich im Bereich des Schaftendes 30.

### Bezugszeichenliste

- 1: Schaft
- 2: Bohrerschneide
- 3: Längsrichtung
- 4: Kanal,
- 5: Kanal
- 6: Mündungsende
- 7: Arbeitsende
- 8: Mündungsende
- 9: Bohrerachse
- 10: Stirnsegment
- 11: Bohrerspitze
- 12: Querschneide
- 13: Verschlußplatte
- 14: Kontaktfläche
- 15: Flanke
- 16: Gegenflanke
- 17: Nut
- 18: Außenflächen
- 19: Drallnut
- 20: Außenflanke
- 21: Freifläche
- 22: Schaftrippe
- 23: Spindel
- 24: Spannsystem
- 25: Spannfutter
- 26: Zulaufleitung
- 27: Ablaufleitung
- 28: Richtungspfeil
- 29: Richtungspfeil
- 30: Schaftende
- 31: Schnittstelle

## Patentansprüche

1. Bohrer
- mit einem Schaft (1) insbesondere aus Vollhartmetall,
- mit am einen Arbeitsende (7) des Schaftes (1) angeordneten Werkzeugschneiden (2),
- mit am anderen Kupplungsende des Schaftes (1) einem Kupplungsbereich zur Verbindung mit der Antriebsspindel einer Werkzeugmaschine und
- mit nebeneinander verlaufend den Schaft (1) im wesentlichen in Längsrichtung (3) durchsetzenden und in dessen Arbeitsende (7) ausmündenden Kanälen (4,5) zur von der Seite des Kupplungsendes hin zu den Werkzeugschneiden (2) erfolgenden Durchleitung von Fluiden ,
dadurch gekennzeichnet,
- daß mehrere eine Kühlmittelschleife eines in sich geschlossenen Kühlmittelkreislaufes bildende Kanäle (4,5), insbesondere ein Kanalpaar am Arbeitsende in den Freiflächenbereich einer mit dem Schaft (1) einstückigen Bohrerschneide (2) ausmünden und
- daß ihre Mündungsenden (6,8) durch eine sie gemeinsam überdeckende und einen Abstand zur benachbarten Werkzeugschneide (2) haltende, fluiddichte Verschlußplatte (13) unter Herstellung eines die Mündungsenden (6,8) räumlich miteinander verbindenden Flüssigkeitsdurchlasses abgedeckt sind.

2. Bohrer nach Anspruch 1
gekennzeichnet durch
eine in die Auflagefläche (14) der Verschlußplatte (13) eingelassene Nut (17) als Flüssigkeitsdurchlaß zwischen den Mündungsenden (6,8).

3. Bohrer nach Anspruch 1 oder 2
gekennzeichnet durch
eine in eine Stirnseite (7) des Arbeitsendes des Schaftes (1) eingelassene Nut als Flüssigkeitsverbindung zwischen den Mündungsenden (6,8).

4. Bohrer nach Anspruch 2 oder 3,
dadurch gekennzeichnet,
daß die Nuten zur Bildung eines rundum abgeschlossenen Kanals miteinander korrespondieren.

5. Bohrer nach einem der vorhergehenden Ansprüche,
dadurch gekennzeichnet,
daß die Außenfläche (18) einer Verschlußplatte (13) bündig mit der Freifläche (21) der benachbarten Werkzeugschneide (2) abschließt.

6. Bohrer nach einem der vorhergehenden Ansprüche,
dadurch gekennzeichnet,
daß die Seitenflächen (14, 15) der Verschlußplatte (13) mindestens teilweise flächenmäßig am Schaft anliegen.

7. Bohrer nach einem der vorhergehenden Ansprüche,
dadurch gekennzeichnet,
daß jeweils mindestens ein Kanalpaar (4,5) eine zwischen zwei Spannuten (19) verlaufende Schaftrippe (22) durchsetzt.

8. Bohrer nach einem der vorhergehenden Ansprüche,
dadurch gekennzeichnet,
daß die Verschlußplatte (13) umfangsseitig einen Teil des Außenmantels einer Schaftrippe (22) bildet.

9. Bohrer nach einem der vorhergehenden Ansprüche,
dadurch gekennzeichnet,
daß die Verschlußplatte (13) auf das Arbeitsende (7) einer Schaftrippe (22) aufgeklebt oder aufgelötet ist.

10. Bohrer nach einem der vorhergehenden Ansprüche,
dadurch gekennzeichnet,
daß die Verschlußplatte (13) aus einem gut wärmeleitenden Werkstoff, insbesondere aus Werkzeugstahl besteht.

11. Kombination einer Werkzeugmaschine mit einem Bohrer nach einem oder mehreren der vorhergehenden Ansprüche,
dadurch gekennzeichnet,
daß die Antriebsspindel der Werkzeugmaschine den anderen Teil des Kühlmittelkreislaufes derart bildet, daß dessen beide Teile bei miteinander korrespondierender Verbindung ihrer einander zugewandten Mündungsenden den Kühlmittelkreislauf schließen.

## Claims

1. Drill
- having a shank (1), in particular made from solid carbide,
- having tool cutting edges (2) arranged at a working end (7) of the shank (1),
- having a coupling area for connection to the drive spindle of a machine tool at the other coupling end of the shank (1), and
- having ducts (4, 5), which run next to one another, essentially in the longitudinal direction (3), through the shank (1) and open out in the working end (7) thereof, for guiding fluids from the side of the coupling end to the tool cutting edges (2),
characterized
- in that a plurality of ducts (4, 5), which form a coolant loop of a continuous coolant circuit, in particular a pair of ducts, open out at the working end into the flank area of a drill cutting edge (2) which is integral with the shank (1), and
- in that their opening ends (6, 8) are covered by a fluid-tight closure plate (13), which covers these ends together and maintains a distance from the adjacent tool cutting edge (2) , so as to form a liquid passage which spatially connects the opening ends (6, 8) to one another.

2. Drill according to Claim 1, characterized by a groove (17) which is formed in the bearing surface (14) of the closure plate (13), as a liquid passage between the opening ends (6, 8).

3. Drill according to Claim 1 or 2, characterized by a groove which is formed in an end side (7) of the working end of the shank (1), as a liquid connection between the opening ends (6, 8).

4. Drill according to Claim 2 or 3, characterized in that the grooves correspond to one another in order to form a duct which is closed all the way around.

5. Drill according to one of the preceding claims, characterized in that the outer surface (18) of a closure plate (13) ends flush with the flank (21) of the adjacent tool cutting edge (2).

6. Drill according to one of the preceding claims, characterized in that the side faces (14, 15) of the closure plate (13) bear against the shank with at least partial surface-to-surface contact.

7. Drill according to one of the preceding claims, characterized in that in each case at least one pair of ducts (4, 5) passes through a shank rib (22) which runs between two flutes (19).

8. Drill according to one of the preceding claims, characterized in that the closure plate (13), on the circumferential side, forms part of the outer circumferential surface of a shank rib (22).

9. Drill according to one of the preceding claims, characterized in that the closure plate (13) is soldered or adhesively bonded onto the working end (7) of a shank rib (22).

10. Drill according to one of the preceding claims, characterized in that the closure plate (13) is made from a material with good thermal conductivity, in particular from tool steel.

11. Combination of a machine tool and a drill according to one or more of the preceding claims, characterized in that the drive spindle of the machine tool forms the other part of the coolant circuit, in such a manner that its two parts, given a mutually corresponding connection between their mutually facing opening ends, close the coolant circuit.

## Revendications

1. Foret, comprenant :
- un fût (1), en particulier en métal dur et plein,
- des tranchants (2) agencés à une extrémité de travail (7) du fût (1),
- une zone d'accouplement à l'autre extrémité du fût (1), pour la liaison avec la broche d'entraînement d'une machine-outil, et
- des canaux (4, 5) disposés les uns à côté des autres, traversant le fût (1) sensiblement en direction longitudinale (3), et débouchant dans son extrémité de travail (7) pour le passage de fluide qui a lieu depuis le côté de l'extrémité d'accouplement jusqu'aux tranchants (2),
caractérisé en ce que :
- plusieurs canaux (4, 5) formant une boucle pour produit réfrigérant d'un circuit de réfrigérant fermé sur lui-même, en particulier une paire de canaux, débouchent à l'extrémité de travail dans la zone de surface libre d'un tranchant (2) d'une seule pièce avec le fût (1), et
- leurs extrémités d'embouchure (6, 8) sont recouvertes par une plaque d'obturation (13) étanche, qui les recouvre conjointement et maintient une distance vis-à-vis des tranchants (2) voisins, en établissant un passage à liquide qui relie dans l'espace les extrémités d'embouchure (6, 8) les unes aux autres.

2. Foret selon la revendication 1,
caractérisé par :
une gorge (17) ménagée dans la surface d'appui (14) de la plaque d'obturation (13) à titre de passage à liquide entre les extrémités d'embouchure (6, 8).

3. Foret selon l'une ou l'autre des revendications 1 et 2,
caractérisé par :
une gorge ménagée dans une face frontale (7) de l'extrémité de travail du fût (1) à titre de liaison à liquide entre les extrémités d'embouchure (6, 8).

4. Foret selon l'une ou l'autre des revendications 2 et 3,
caractérisé en ce que :
les gorges communiquent les unes avec les autres afin de former un canal refermé sur tout le pourtour.

5. Foret selon l'une des revendications précédentes,
caractérisé en ce que :
la surface extérieure (18) d'une plaque d'obturation (13) est reliée en affleurement avec la surface libre (21) du tranchant voisin (2).

6. Foret selon l'une des revendications précédentes,
caractérisé en ce que :
les surfaces latérales (14, 15) de la plaque d'obturation (13) sont appliquées sur le fût au moins partiellement à plat.

7. Foret selon l'une des revendications précédentes,
caractérisé en ce que :
au moins une paire de canaux respectifs (4, 5) traverse une nervure du fût (22) qui s'étend entre deux gorges à copeaux (19).

8. Foret selon l'une des revendications précédentes,
caractérisé en ce que :
la plaque d'obturation (13) forme sur la périphérie une partie de l'enveloppe extérieure d'une nervure du fût (22).

9. Foret selon l'une des revendications précédentes,
caractérisé en ce que :
la plaque d'obturation (13) est collée ou soudée sur l'extrémité de travail (7) d'une nervure du fût (22).

10. Foret selon l'une des revendications précédentes,
caractérisé en ce que :
la plaque d'obturation (13) est réalisée en un matériau bon conducteur de la chaleur, en particulier en acier à outils.

11. Combinaison formée par une machine-outil et un foret selon l'une ou plusieurs des revendications précédentes,
caractérisée en ce que :
la broche d'entraînement de la machine-outil constitue l'autre partie du circuit de réfrigérant, de telle manière que ces deux parties referment le circuit de réfrigérant lors d'une jonction correspondante mutuelle de leurs extrémités d'embouchure tournées l'une vers l'autre.
